# EUROPÄISCHE PATENTSCHRIFT

(11) **EP 1 852 558 B1**
(45) Veröffentlichungstag und Bekanntmachung des Hinweises auf die Patenterteilung: **25.11.2009**
(21) Anmeldenummer: 06009110.5
(22) Anmeldetag: 03.05.2006
(51) Int. Cl.: E03C 1/04, F16K 27/04

(54) **Innengehäuse für eine Sanitärarmatur und Sanitärarmatur**
Internal housing for a sanitary fitting and sanitary fitting
Boîtier intérieur pour un robinet sanitaire et robinet sanitaire

(43) Veröffentlichungstag der Anmeldung: 07.11.2007
(73) Patentinhaber: KWC AG, 5726 Unterkulm (CH)
(72) Erfinder: Leutwyler, André, 5737 Menziken (CH); Gloor, Herbert, 5726 Unterkulm (CH)
(74) Vertreter: Schaad, Balass, Menzl & Partner AG

(56) Entgegenhaltungen:
- EP-A- 1 028 279
- DE-A1- 19 756 971
- DE-A1- 19 930 623
- US-A1- 2002 185 823
- US-A1- 2005 076 963

## Beschreibung

Die vorliegende Erfindung betrifft ein Innengehäuse gemäss dem Oberbegriff des Anspruchs 1 und eine Sanitärarmatur gemäss Anspruch 10 mit einem derartigen Innengehäuse.

Ein für eine Sanitärarmatur bestimmtes Innengehäuse dieser Art sowie eine Sanitärarmatur mit einem solchen Innengehäuse sind beispielsweise aus US-A-2003/0168100 bekannt. Diese Druckschrift offenbart ein hülsenförmiges, aus Kunststoff gefertigtes Innengehäuse, welches zum Aufnehmen einer Steuerpatrone zum Einstellen der Wasserausflussmenge aus der Sanitärarmatur bestimmt ist. Weiter ist, falls die Steuerpatrone je einen Wasserzufluss für warmes und kaltes Wasser aufweist, ebenfalls eine Mischtemperatur des aus der Sanitärarmatur auslaufenden Wassers einstellbar. Das bekannte Innengehäuse weist seitlich einen Abflussdurchlass auf, durch welchen das aus einer Abflussmündung der Steuerpatrone ausfliessendes Wasser hindurch geführt wird.

Als nachteilig am Stand der Technik erweist sich, dass das bekannte Innengehäuse keine Möglichkeit bietet, Wasser auf einfache Art und Weise einer Zuflussmündung der Steuerpatrone zuzuführen und von der Abflussmündung der Steuerpatrone abzuführen.

Die DE 197 56 971 A1 offenbart eine Einhebelwassermischarmatur mit einem in einen Armaturenkörper einbringbaren Einsatz, in dem eine Mischventilkartusche mit einem aus dem Einsatz vorstehenden Stellhebel angeordnet ist, wobei der Einsatz Ein- und Auslassöffnungen für das zu- und abfliessende Wasser hat und wenigstens mit einer Ringschulter axial in der Aufnahmebohrung des Armaturenkörpers abgestützt ist. Dabei wird zur Verbesserung vorgeschlagen, dass der Einsatz einerseits eine stirnseitig offene Hülse als Aufnahmeraum für die Mischventilkartusche und andererseits einen im Durchmesser verringerten Ansatz hat, in dem Wasserführungskanäle für das zufliessende Kalt- und Warmwasser und das abfliessende Mischwasser ausgebildet sind, wobei an der Einsteckseite der Aufnahmebohrung ein Gewinde für eine Ringschraube ausgebildet ist. Von deren Stirnfläche ist sowohl die Hülse des Einsatzes im Armaturenkörper als auch die Mischventilkartusche im Aufnahmeraum des Einsatzes axial eingespannt.

Die DE 199 30 623 A1 offenbart ein Ventil mit wenigstens zwei aufeinander liegenden, zueinander verschiebbaren Scheiben als Ventilorgan, wobei die Scheiben zusammen mit den zugehörigen Dicht- und Gleitelementen in einem aus einem Boden und einer Hülse gebildeten, eine Öffnung für ein Ventilstellglied sowie Zu- und Abflussöffnungen enthaltenden, Gehäuse angeordnet sind. Somit ist das Gehäuse mit den Ventilelementen als Ventilkartusche mit einem Armaturenkörper verbindbar, wobei die Hülse mit einer zu den Anschlussdichtungen im Boden abgekehrten Stirnseite versehen ist. Dabei ist vorgeschlagen, dass im Armaturenkörper für die Ventilkartusche ein Aufnahmeraum mit einer in der Kammerwandung ausgebildeten Ringnut vorgesehen ist, in der ein einsprengbarer Sicherungsring anordbar ist, wobei der Sicherungsring in der Stecklage an einer Anlagefläche der Ventilkartusche anliegt. Der Abstand von der Anlagefläche am Sicherungsring für die Ventilkartusche zur Anlagefläche im Armaturenkörper für eine oder mehrere Anschlussdichtungen ist so bemessen, dass bei eingesprengtem Sicherungsring die erforderliche Vorspannung der Ventilelemente in der Ventilkartusche erfolgt.

Die Aufgabe der vorliegenden Erfindung ist es, ein Innengehäuse bereitzustellen, welches das dauerhaft dichte Zuführen von Wasser in eine Zuflussmündung und das dauerhaft dichte Abführen aus der Abflussmündung der Steuerpatrone auf einfache Weise ermöglicht.

Diese Aufgabe wird durch ein Innengehäuse mit den Merkmalen des Anspruchs 1 und mit einer Sanitärarmatur mit den Merkmalen des Anspruchs 10 gelöst.

Erfindungsgemäss weist das Innengehäuse einen Boden auf, durch welchen ein Zuflussdurchlass und ein Abflussdurchlass hindurch führen, wobei durch den Zuflussdurchlass Wasser einer Zuflussmündung der Steuerpatrone zuführbar und durch den Abflussdurchlass hindurch das aus einer Abflussmündung der Steuerpatrone austretende Wasser abführbar ist. Weiter sind im Boden eine Zuleitungsdichtungsnute, die den Zuflussdurchlass vollständig umläuft, und eine Abflussdichtungsnute, die den Abflussdurchlass vollständig umläuft, ausgebildet.

Um einen dichten Übergang zwischen dem Zuflussdurchlass und der Zuflussmündung zu gewährleisten, ist in die Zuleitungsdichtungsnute ein Zuflussdichtungselement dichtend einlegbar, welches ebenfalls dicht um die Zuflussmündung herum an die Steuerpatrone anliegt und in eine an der Steuerpatrone ausgebildete Nute eingreift. Dadurch ist ein dauerhaft dichter Übergang vom wasserführenden Zuflussdurchlass in die Steuerpatrone ausbildbar, da das Zuflussdichtungselement einerseits in die Zuleitungsdichtungsnute und andererseits in die an der Steuerpatrone ausgebildeten Steuerpatronennute einlegbar ist. Selbst bei einem durch das Wasser übertragenen Druckstoss, der zu einem auf das Zuflussdichtungselement in Radialrichtung wirkenden Kraftstoss führt, bleibt das Zuflussdichtungselement in der Zuleitungsdichtungsnute gehalten. Folglich führt der auf das Zuflussdichtungselement wirkende Kraftstoss zu keiner Verschiebung des Steuerpatronenseitigen Endbereichs des Zuflussdichtungselements, sodass der Übergang vom Durchflussdurchlass in die Zuflussmündung dauerhaft dicht ist.

Ebenso ist, um einen dichten Übergang zwischen der Abflussmündung und dem Abflussdurchlass zu gewährleisten, in die Abflussdichtungsnute ein Abflussdichtungselement dichtend einlegbar, welches ebenfalls dicht um die Abflussmündung herum an die Steuerpatrone anliegt und in eine an der Steuerpatrone ausgebildete Steuerpatronennute eingreift. Dadurch ist ein dauerhaft dichter Übergang von der Abflussmündung in den wasserführenden Abflussdurchlass ausbildbar, da das Abflussdichtungselement einerseits in die Abflussdichtungsnute und andererseits in die an der Steuerpatrone ausgebildeten Steuerpatronennute einlegbar ist. Selbst bei einem durch das Wasser übertragenen Druckstoss, der zu einem auf das Abflussdichtungselement in Radialrichtung wirkenden Kraftstoss führt, bleibt das Abflussdichtungselement in der Abflussdichtungsnute gehalten. Folglich führt der auf das Abflussdichtungselement wirkende Kraftstoss zu keiner Verschiebung des Steuerpatronenseitigen Endbereichs des Abflussdichtungselements, sodass der Übergang von der Abflussmündung in den Abflussdurchlass dauerhaft dicht ist.

Gemäss einer bevorzugten Ausführungsform des Innengehäuses ist dieses aus Kunststoff einstückig ausgebildet. Mittels diesem Werkstoff ist es auf einfachste Weise möglich, die Zuleitungsdichtungsnute wie auch die Abflussdichtungsnute im Boden der Aufnahmeöffnung auszuformen und den Zuflussdurchlass und den Abflussdurchlass durch den Boden hindurch zu führen. Für die Aufnahme grosser Kräfte hat sich der Kunststoff mit der Handelsbezeichnung Grivory HT1V-4FWA der Ems-Chemie AG (GRIVORY ist eine eingetragene Marke der EMS-CHEMIE AG, Domat/Ems, Schweiz) erwiesen.

Gemäss einer bevorzugten Ausführungsform ist die Zuleitungsdichtungsnute zusammenhängend mit der Abflussdichtungsnute ausgebildet, wodurch das in diese Zuleitungsdichtungsnute einzulegende Zuflussdichtungselement und das in die Abflussdichtungsnute einzulegende Abflussdichtungselement zusammenhängend ausgebildet werden können. Dadurch ist deren Montage und Handbarkeit vereinfacht und eine mechanische Stabilität des Zuflussdichtungselements wie auch des Abflussdichtungselements ist verbessert.

Gemäss einer weiteren bevorzugten Ausführungsform ist der Zuflussdurchlass und der Abflussdurchlass unmittelbar wasserführend, wodurch eine einfache Konstruktion des Innengehäuses realisierbar ist. Weiter weist das Innengehäuse eine mit dem Abflussdurchlass verbundene Wasserauslassnute auf. Mittels dieser Wasserauslassnute ist es auf einfachste weise möglich, das aus dem Abflussdurchlass und folglich aus der Wasserauslassnute ausfliessende Wasser in einen Aussengehäuseausflusskanal eines am Innengehäuse schwenkbar gelagerten Armaturauslaufgehäuseteils einzuleiten.

Gemäss einer bevorzugten Ausführungsform sind oberhalb und unterhalb der Wasserauslassnute eine obere Dichtungsaufnahmevertiefung beziehungsweise eine untere Dichtungsaufnahmevertiefung ausgebildet. Durch in die obere Dichtungsaufnahmevertiefung und untere Dichtungsaufnahmevertiefung einlegbare, im Querschnitt V-förmige Dichtungselemente ist ein dichter Übergang zwischen der Wasserauslassnute und dem Aussengehäuseausflusskanal auf einfachste Weise realisierbar.

Gemäss einer bevorzugten Ausführungsform weist das Innengehäuse im Abflussdurchlass ein Umlenkelement auf, mittels welchem ein durch den Abflussdurchlass durchströmender Wasserfluss um zumindest annähernd 90° umlenkbar ist. Durch die Umlenkflächen des Umlenkelements wird der Wasserstrahl kontinuierlich umgelenkt, wodurch eine Wirbelbildung weitgehend vermeidbar ist und folglich durch Wirbelbildung verursachte Geräusche vermieden werden können.

Gemäss einer weiteren bevorzugten Ausführungsform weist die radiale Aussenfläche des Innengehäuses wenigstens annähernd eine kreiszylindrische Form auf und eine von der Aussenfläche radial abstehende Nase ist am Innengehäuse ausgebildet. Diese Nase weist in Umfangsrichtung Anschlagsflächen auf. Mittels dieser am Innengehäuse ausgebildeten Nase ist es auf einfachste Weise möglich, eine Begrenzung des Schwenkbereichs eines das Innengehäuse umfassenden Armaturauslaufgehäuseteils zu realisieren, der seinerseits hierzu Gegenanschlagsflächen aufweist, die dazu bestimmt sind mit den Anschlagsflächen der Nase zusammenzuwirken.

Weitere bevorzugte Ausführungsformen des erfindungsgemässen Innengehäuses und bevorzugte Ausführungsformen der Sanitärarmatur sind in den weiteren Ansprüchen angegeben.

Weitere besondere Vorteile und Wirkungsweisen ergeben sich aus der Detailbeschreibung und der Zeichnung.

Im Folgenden wird die Erfindung anhand eines in der Zeichnung dargestellten Ausführungsbeispiels näher erläutert. Es zeigen rein schematisch:
- Fig. 1: in perspektivischer Seitenansicht, teilweise geschnitten eine ein Innengehäuse aufweisende Sanitärarmatur mit einer in das Innengehäuse eingesetzten Steuerpatrone und einem am Innengehäuse schwenkbar gelagerten Armaturauslaufgehäuseteil, wobei der Schnitt entlang zwei zueinander abgewinkelten Schnittebenen erfolgt;
- Fig. 2: in perspektivischer Seitenansicht das Innengehäuse;
- Fig. 3: in perspektivischer Draufsicht das Innengehäuse, mir einer zur Aufnahme der Steuerpatrone bestimmten Aufnahmeöffnung;
- Fig. 4: in Seitenansicht und teilweise entlang der in Fig. 5 eingezeichneten Schnittlinie IV-IV geschnitten das Innengehäuse; und
- Fig. 5: in Draufsicht das Innengehäuse.

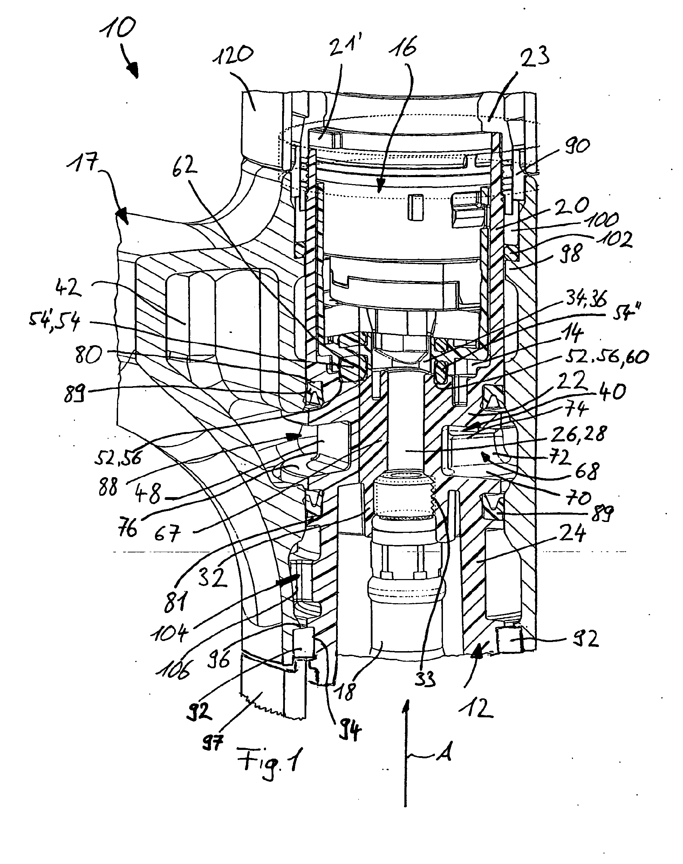

In Fig. 1 ist eine erfindungsgemässe Sanitärarmatur 10 mit einem teilweise dargestellten, erfindungsgemässen Innengehäuse 12 gezeigt. Die Sanitärarmatur 10 ist dazu bestimmt an einem Waschtisch mit in diesen eingelassenem Waschbecken in bekannter Art und Weise montiert zu werden.

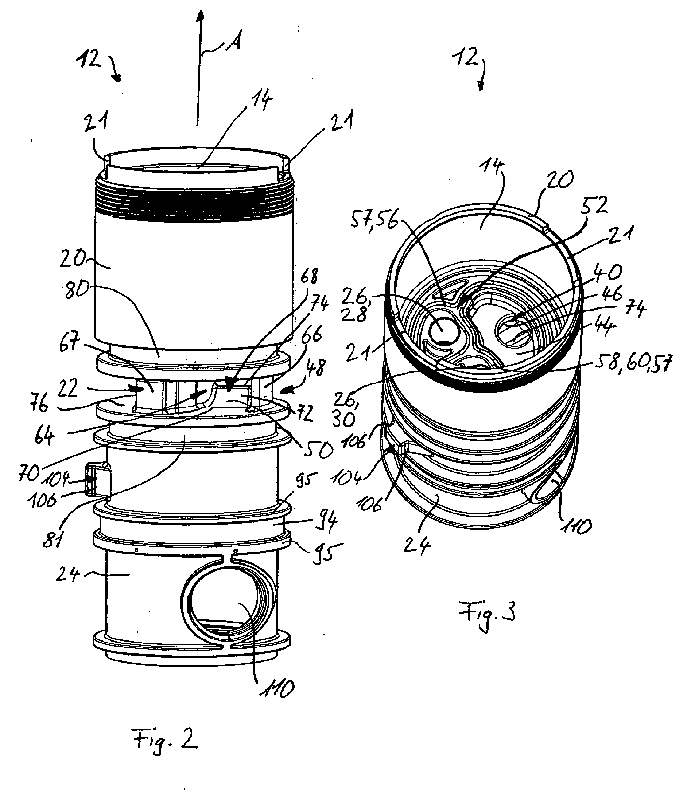

Das Innengehäuse 12 weist eine nach oben offene Aufnahmeöffnung 14 (siehe auch Fig. 2 bis 5) auf, in welche eine Steuerpatrone 16 eingesetzt ist. Mittels der Steuerpatrone 16 kann eine Wasserausflussmenge aus einer in bekannter Art und Weise an einem Armaturauslaufgehäuseteil 17 angeordneten Wasseraustrittsöffnung der Sanitärarmatur 10 eingestellt werden. Weiter kann mit der vorliegenden Steuerpatrone 16 auch ein Mischverhältnis von warmem und kaltem Wasser und somit die Temperatur des aus der Wasseraustrittsöffnung ausfliessenden Wassers eingestellt werden. Das kalte Wasser wird über eine Kaltwasserzuflussleitung 18 und das warme Wasser über eine Warmwasserzuflussleitung (nicht gezeigt) der Sanitärarmatur 10 zugeführt. Die Kaltwasserzuflussleitung 18 und die Warmwasserzuflussleitung bilden je eine Wasserzuflussleitung für die Sanitärarmatur 10.

Das in den Fig. 1 bis 5 gezeigte Innengehäuse 12 weist im wesentlichen eine kreiszylindrische Kontur auf, welche eine Axialrichtung A definiert. Die Aufnahmeöffnung 14 ist in Umfangsrichtung durch eine Wand 20 begrenzt, die durch einen hohlzylinderförmigen, in Axialrichtung A ausgerichteten Abschnitt des Innengehäuses 12 ausgebildet ist. Nach unten ist die Aufnahmeöffnung 14 durch einen Boden 22 begrenzt, der integral mit der Wand 20 ausgeformt ist und sich in Axialrichtung A etwa auf halben Höhe des Innengehäuses 12 befindet.

Um die Steuerpatrone 16 in einer definierten Drehlage um die Axialrichtung A in der Aufnahmeöffnung 14 zu halten, weist, wie Fig. 1 zeigt, die Wand 20 eine nach oben wie auch seitlich offene Ausnehmungen 21 (siehe Fig. 2 bis 5) auf, in welche ein Vorsprung 21' (siehe Fig. 1) der Steuerpatrone 16 eingreift. Mittels einer von oben her auf das Innengehäuse 12 aufgeschraubten, als Überwurfmutter ausgebildete Patronenbefestigungsmutter 23 ist die Steuerpatrone 16 in der Aufnahmeöffnung 14 fixiert, insbesondere wird die Steuerpatrone mittels der Patronenbefestigungsmutter 23 in Richtung des Bodens 22 gedrückt.

Weiter weist das Innengehäuse 12 in Axialrichtung A, bezüglich dem Boden 22 der Wand 20 gegenüberliegend, eine ebenfalls im Wesentlichen hohlzylinderförmige, in Axialrichtung A ausgerichtete Hülsenwandung 24 auf. Diese Hülsenwandung 24 ist ebenfalls integral mit dem Boden 22 geformt, sodass die Wand 20, der Boden 22 und die Hülsenwandung 24 einstückig ausgebildet sind.

Durch den Boden 22 ist in Axialrichtung A ein einen Zuflussdurchlass 26 bildender Kaltwasserdurchlass 28 und ein, ebenfalls einen Zuflussdurchlass 26 bildender Warmwasserdurchlass 30 hindurchgeführt. Der Kaltwasserdurchlass 28 und der Warmwasserdurchlass 30 weisen je in einem der Aufnahmeöffnung 14 abgewandten Endbereich einen vom Boden 22 abstehenden Anschlussstutzen 32 mit einem Innengewinde 33 (siehe Fig. 1) auf, in welche die Kaltwasserzuflussleitung 18 beziehungsweise die Warmwasserzuflussleitung dichtend eingeschraubt sind.

Durch den Kaltwasserdurchlass 28 ist kaltes Wasser einer eine Zuflussmündung 34 bildenden Kaltwassermündung 36 der Steuerpatrone 16 zuführbar. Die Kaltwassermündung 36 liegt in Axialrichtung A zumindest annähernd in der Verlängerung des Kaltwasserdurchlasses 28. Dementsprechend ist durch den Warmwasserdurchlass 30 warmes Wasser einer eine Zuflussmündung bildenden Warmwassermündung zuführbar. Die Warmwassermündung liegt in Axialrichtung A zumindest annähernd in der Verlängerung des Warmwasserdurchlasses 30.

Um das der Steuerpatrone 16 zugeführte Wasser der Wasseraustrittsöffnung der Sanitärarmatur 10 zuzuführen, weist das Innengehäuse 12 einen durch den Boden 22 hindurch geführten Abflussdurchlass 40 auf, der in eine umfangsseitig offenen, im Boden 22 ausgeformte Wasserauslassnute 48 mündet. Das bei geöffneter Steuerpatrone 16 durch die Wasserauslassnute 48 hindurchströmende Wasser wird in einen, im Armaturauslaufgehäuseteil 17 angeordneten Aussengehäuseausflusskanal 42 eingeleitet, an dessen Ende die Wasseraustrittsöffnung angeordnet ist.

Der Abflussdurchlass 40 ist durch mehrere Abschnitte ausgebildet. Steuerpatronenseitig weist der Abflussdurchlass 40 eine in den Boden 22 eingeformte, in Richtung der Steuerpatrone 16 offene, im wesentlichen nierenschalenförmige Vertiefung 44 auf, von deren Boden ein rohrförmiger Kanalabschnitt 46 in Axialrichtung A nach unten in einen rechtwinklig zu diesem angeordneten Verbindungsabschnitt 64 mündet, wobei der Kanalabschnitt 46 in etwa mittig auf den Verbindungsabschnitt 64 trifft. Dieser mündet seinerseits bei Abflussdurchlassmündungen 50 in die Wasserauslassnute 48.

Aus den Fig. 1, 3 und 5 ist ersichtlich, dass in den Boden 22, von oben her, eine den Kaltwasserdurchlass 28 vollständig umschliessende, von diesem beabstandete Kaltwasserdichtungsnute 56 ausgeformt ist. Ebenso ist eine den Warmwasserdurchlass 30 vollständig umschliessende Warmwasserdichtungsnute 58 im Boden 22 ausgeformt, welche wiederum von dem Warmwasserdurchlass 30 beabstandet ist. Weiter ist eine den Abflussdurchlass 40 vollständig umschliessende und von diesem beabstandete Abflussdichtungsnute 60 im Boden 22 ausgeformt. Die drei Nuten - die Kaltwasserdichtungsnute 56, die Warmwasserdichtungsnute 58 und Abflussdichtungsnute 60 - sind abschnittsweise integral miteinander als eine einzige Nute 52 ausgeformt, sodass zwischen dem Kaltwasserdurchlass 28 und dem Warmwasserdurchlass 30 lediglich ein gemeinsamer Nutenabschnitt in den Boden 22 eingeformt ist. Ebenso ist zwischen dem Warmwasserdurchlass 30 und dem Abflussdurchlass 40 ein gemeinsamer Nutenabschnitt und zwischen dem Abflussdurchlass 40 und dem Kaltwasserdurchlass 28 ein gemeinsamer Nutenabschnitt ausgebildet.

Um einen dichten Übergang zwischen dem Kaltwasserdurchlass 28 und der Kaltwassermündung 36 der Steuerpatrone 16, dem Warmwasserdurchlass 30 und der Warmwassermündung und der Abflussmündung und dem Abflussdurchlass 40 zu gewährleisten, ist in die Nute 52 ein passendes Dichtungselement 54 eingelegt, welches auch in eine entsprechend ausgebildete Steuerpatronennute 62 eingreift.

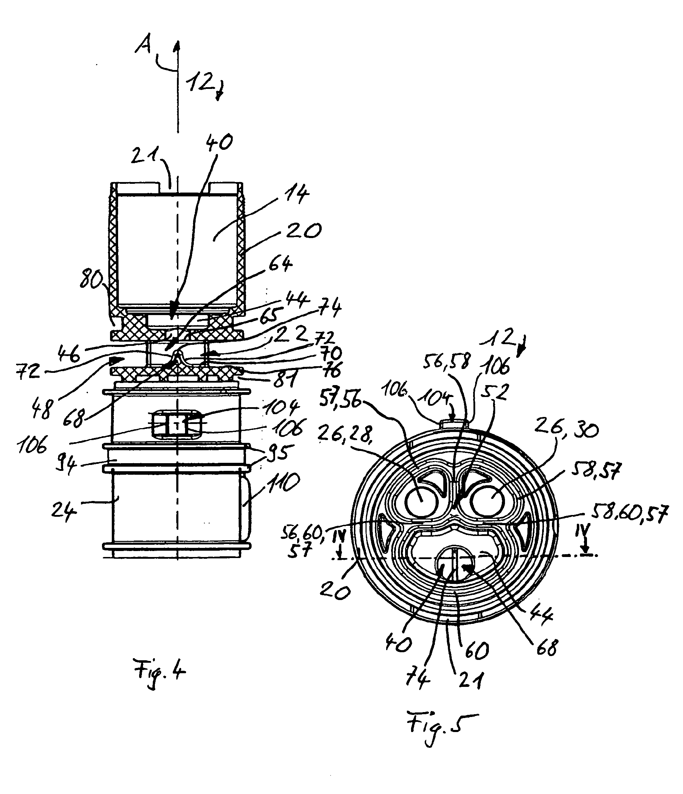

Die Nute 52 wie auch das Dichtungselement 54 weisen annähernd die Form einer Brezel auf (siehe Fig. 3 und 5). Durch diese Ausbildung der Nute 52 wie auch des Dichtungselements 54 ist die Handhabung des Dichtungselements 54 einfach.

Das Dichtungselement 54 bildet entsprechend seiner Funktion Zuflussdichtungselemente 54' und ein Abflussdichtungselement 54''. Die Zuflussdichtungselemente 54' sind durch die in die Zuleitungsdichtungsnuten 57 eingesetzten Abschnitte des Dichtungselements 54 gebildet. Entsprechend ist das Abflussdichtungselement 54'' durch den in die Abflussdichtungsnute 60 eingelegten Abschnitt des Dichtungselements 54 gebildet.

Da das Dichtungselement 54 zum einen in die Nute 52 und zum andern in die Steuerpatronennute 62 eingreift, ist das Dichtungselement 54, ausser in einem allenfalls zwischen dem Boden 22 und der Steuerpatrone 16 ausgebildeten Spalt, in radialer Richtung durch die Nute 52 und durch die Steuerpatronennute 62 gehalten, wodurch das Dichtungselement 54 von durch das Wasser übertragenen Druckstössen, beispielsweise hervorgerufen durch abruptes Schliessen der Steuerpatrone 16, nicht vorschoben werden kann. Dadurch ist ein dauerhaft dichter Sitz des Dichtungselements 54 zwischen der Steuerpatrone 16 und dem Boden 22 gewährleistet.

Alternativ zur integralen Ausformung der Kaltwasserdichtungsnute 56, der Zuleitungsdichtungsnute 57 und der Warmwasserdichtungsnute 58 als eine einzige Nute 52 können die Kaltwasserdichtungsnute 56, die Zuleitungsdichtungsnute 57 und die Warmwasserdichtungsnute 58 auch voneinander getrennt im Boden 22 ausgebildet sein. Dementsprechend werden auch die Zuflussdichtungselemente 54' und das Abflussdichtungselement voneinander getrennt ausgebildet.

Wie insbesondere in den Fig. 2 und 4 gut erkennbar, ist die umlaufende, in radialer Richtung gegen aussen offene Wasserauslassnute 48 in den Boden 22 des Innengehäuses 12 eingeformt. Um den in Axialrichtung A verlaufenden Kanalabschnitt 46 des Abflussdurchlass 40 mit der Wasserauslassnute 48 zu verbinden, weist der Abflussdurchlass 40 den rechtwinklig zur Axialrichtung A verlaufenden Verbindungsabschnitt 64 auf, wobei der Kanalabschnitt 46 in Radialrichtung in etwa mittig zwischen der Wand 20 und deren Symmetrieachse verläuft. Dieser Verbindungsabschnitt 64 ist einerseits, radial gegen aussen durch ein wandartiges Bodensegment 66 und andererseits durch ein weiteres Bodensegment 67 begrenzt, durch welches der Kaltwasserdurchlass 28 und der Warmwasserdurchlass 30 hindurchgeführt sind.

Um das durch den Abflussdurchlass 40 hindurchströmende Wasser aus der Axialrichtung A zumindest annähernd um 90° vom Kanalabschnitt 46 in den Verbindungsabschnitt 64 umzulenken, ist im Verbindungsabschnitt 64, gegenüberliegend der Mündung 65 des Kanalabschnitts 46 in den Verbindungsabschnitt 64 (siehe Fig. 4) ein Umlenkelement 68 ausgebildet. Dieses Umlenkelement 68 erhebt sich keilartig gegenüber einem Kanalboden 70 des Verbindungsabschnitts 64 in Richtung der Mündung und ist dazu bestimmt, einen aus der Mündung 65 austretenden Wasserstrahl in den Verbindungsabschnitt 64 hinein abzulenken. Dieses Umlenkelement 68 weist hierzu zwei Umlenkflächen 72 auf, welche bei einer in radialer Richtung verlaufenden Scheitellinie 74 zusammentreffen. Die Scheitellinie 74 verläuft mittig unterhalb der Mündung 65, sodass der aus der Mündung 65 austretende Wasserstahl die Scheitellinie 74 mittig trifft. Die Umlenkflächen 72 sind, um den Wasserstrahl entlang diesen Umlenkflächen 72 abzulenken, konkav gewölbt und gehen kontinuierlich in den Kanalboden 70 über, der seinerseits kontinuierlich in eine untenliegende Seitenfläche 76 der Wasserauslassnute 48 übergeht. Durch die Ausbildung des Umlenkelements 68 mit zwei Umlenkflächen 72 wirkt dieses auch als Strahlteiler.

Durch das Umlenkelement 68 mit den Umlenkflächen wird das von oben her in den Verbindungsabschnitt 64 eingeleitete Wasser kontinuierlich umgelenkt wodurch eine Wirbelbildung weitgehend vermieden werden kann. Folglich kann auch eine mit der Wirbelbildung verursachte Geräuschentwicklung weitgehend vermieden werden.

Durch die oben beschriebene Anordnung des Verbindungsabschnitts 64 bezüglich der Wasserauslassnute 48 mündet dieser in einem flachen Winkel bezüglich der Tangentialrichtung der Wasserauslassnute 48 bei zwei einander gegenüberliegenden Abflussdurchlassmündungen 50 in diese. Dadurch kann wiederum eine Wirbelbildung weitgehend verhindert werden.

Eine obere Dichtungsaufnahmevertiefung 80 ist in eine radial aussenliegende Mantelfläche des Innengehäuses 12, im Bereich des Bodens 22, oberhalb der Wasserauslaufnute 48 eingeformt und umläuft das Innengehäuse 12 vollständig. Eine untere Dichtungsaufnahmevertiefung 81 ist in die aussenliegende Mantelfläche, im Bereich der Hülsenwandung 24, leicht unterhalb der Wasserauslaufnute 48 ausgebildet.

Der Armaturauslaufgehäuseteil 17 weist im Innern den Aussengehäuseausflusskanal 42 auf, der dazu bestimmt ist, das aus der Wasserauslaufnute 48 austretende Wasser durch den Armaturauslaufgehäuseteil 17 zur Wasseraustrittsöffnung zu leiten. Hierzu bildet das Armaturauslaufgehäuseteil 17 zusammen mit der Wasserauslaufnute 48 einen Ringkanal 88 aus, wobei eine Wandung des Armaturauslaufgehäuseteils 17 im Bereich des Ringkanals 88 dünner ausgebildet als oberhalb und unterhalb des Ringkanals 88. Dadurch kann ein Strömungsquerschnitt des Ringkanals 88 vergrössert werden, wodurch die Durchflussgeschwindigkeit im Ringkanal 88 gesenkt wird. Eine tiefere Durchflussgeschwindigkeit im Ringkanal führt zu einer geringeren Wirbelbildung und somit zu einer Verminderung der durch das durchströmende Wasser verursachten Geräusche.

Oberhalb und unterhalb des Ringkanals 88 ist in die obere Dichtungsaufnahmevertiefung 80 beziehungsweise in die untere Dichtungsaufnahmevertiefung 81 je ein im Querschnitt V-förmiger Dichtungsring 89 eingelegt, der dichtend am Innengehäuse 12 wie auch am Armaturauslaufgehäuseteil 17 anliegt. Um mittels des Wasserdrucks die Dichtungsringe 89 einerseits, radial nach innen, dicht an das Innengehäuse 12 und andererseits dicht an das Armaturauslaufgehäuseteil 17 zu drücken, ist die Öffnung jedes V-förmigen Dichtungsrings dem Ringkanal 88 zugewandt.

Um den Armaturauslaufgehäuseteil 17 am Innengehäuse 12 schwenkbar zu halten, sind ein oberer Gleitring 100 und ein unterer Gleitring 92 zwischen dem Innengehäuse und dem Armaturauslaufgehäuseteil 17 angeordnet.

Der untere Gleitring 92 ist in eine an der Hülsenwandung 24 ausgebildete Gleitringhaltenute 94 eingelegt, wobei er in radialer Richtung über die Hülsenwandung 24 vorsteht. Die Gleitringhaltenute 94 ist durch zwei von der Hülsenwandung 24 vorstehende Krägen 95 ausgebildet. Alternativ kann auch auf die Gleitringhaltenute 94 verzichtet werden, wobei dann der untere Gleitring auf das entsprechend ausgebildete Innengehäuse von unten her aufgesteckt wird.

Der obere Gleitring 100 wird von oben her, bevor die Patronenbefestigungsmutter 23 auf das Innengehäuse 12 aufgeschraubt wird, auf das Innengehäuse 12 aufgesetzt und liegt radial innen an dieses und radial aussen an das Armaturauslaufgehäuseteil 17 an.

Um das Armaturauslaufgehäuseteil 17 in Axialrichtung A bezüglich dem Innengehäuse 12 zu fixieren, weist dieses direkt oberhalb des Bereichs, an welchem der untere Gleitring 92 an das Armaturauslaufgehäuseteil 17 anliegt einen ringartigen, nach innen ausgerichteten Vorsprung 96 auf, mittels welchem das Armaturauslaufgehäuseteil 17 auf dem unteren Gleitring 92 aufliegt. Dieser liegt seinerseits auf einem bezüglich dem Innengehäuse 12 ortsfesten Aussengehäusesockel 97 auf. Weiter weist das Armaturauslaufgehäuseteil 17 einen radial nach innen vorstehenden Befestigungsring 98 mit einer nach oben freiliegenden Anschlagsfläche auf. Der Befestigungsring 98 ist dazu bestimmt, mit der oberhalb des Befestigungsrings 98 angeordneten Patronenbefestigungsmutter 23 über den oberen Gleitring 100 und einen O-Ring 102 zusammenzuwirken, um das Armaturauslaufgehäuseteil 17 in Axialrichtung A zu halten. Der O-Ring 102 ist dazu bestimmt, ein Eindringen von Schmutz in die Sanitärarmatur 10 zu verhindern.

Um den Schwenkbereich des Armaturauslaufgehäuseteils 17 zu begrenzen, ist an der Hülsenwandung 24 des Innengehäuses 12 eine radial vorstehende Nase 104 ausgebildet, welche in Axialrichtung A zwischen der unteren Dichtungsaufnahmevertiefung 81 und der Gleitringhaltenute 94 angeordnet ist. Diese Nase 104 weist in Umfangsrichtung zwei einander gegenüberliegende Anschlagsflächen 106 auf, die mit Gegenanschlagsflächen am Armaturausflussgehäuseteil 17 zusammenwirken. Die Gegenanschlagsflächen begrenzen eine nach innen offene Ausnehmung des Armaturauslaufgehäuseteils 17.

Wie in Fig. 2 gezeigt, weist die Hülsenwandung 24 des Innengehäuses 12 einen radialen, runden Durchgang 110 auf, welcher dazu bestimmt ist, von mechanischen Teilen eines allgemein bekannten Ablaufventil-Betätigungsmechanismus des Waschbeckens durchgriffen zu sein. Dieser Ablaufventil-Betätigungsmechanismus durchgreift in bekannter Art und Weise ebenfalls den in Axialrichtung A zwischen dem Waschbecken und dem Armaturauslaufgehäuseteil 17 angeordneten Aussengehäusesockel 97, welche bezüglich dem Innengehäuse 12 ortsfest ist.

Um ein zusammenwirkendes Paar Keramikscheiben der Steuerpatrone 16 in bekannter Art und Weise gegeneinander zu Verschieben, womit die Wasserdurchflussmenge und das Mischverhältnis von warmem und kaltem Wasser eingestellt werden kann, ist eine der Keramikscheiben mit einem Betätigungsschaft der Steuerpatrone wirkverbunden. Das Gehäuse der Sanitärarmatur 10 weist einen mit dem Betätigungsschaft verbundenen Handgriff auf. Weiter weist das Gehäuse der Sanitärarmatur 10 eine Kuppelkappe 120 auf, welche vom Betätigungsschaft beziehungsweise dem Handgriff durchgriffen ist und das Innengehäuse 12 mit der darin eingesetzten Steuerpatrone 16 umschliesst. Die Kuppelkappe 120 steht zumindest annähernd an dem Armaturauslaufgehäuseteil 17 an und bildet mit diesem und dem Aussengehäusesockel 97 das Aussengehäuse der Sanitärarmatur 10.

Ein Führungsring 90 ist durch Einschnappen an der Patronenbefestigungsmutter 23 gehalten. Hierzu weist die Patronenbefestigungsmutter 23 in ihrer radial aussenliegenden Mantelfläche eine umlaufende Vertiefung auf, in welche eine ringartige Verdickung des Führungsrings 90 eingreift. Der Führungsring 90 dient dazu, die Kuppelkappe 120 radial zu führen. Weiter dient der Führungsring 90 dazu eine Grobabdichtung sicherzustellen, sodass durch den Spalt zwischen dem Armaturauslaufgehäuseteil 17 und der Kuppelkappe 120 kein Schmutz in die Sanitärarmatur eindringen kann. Hierzu weist der Führungsring 90 einen radial nach aussen vorstehenden, umlaufenden Lappen auf, der in Axialrichtung A einerseits an eine obere Stirnfläche des Armaturauslaufgehäuseteils 17 und andererseits an eine untere Stirnfläche der Kuppelkappe 120 anliegt.

In einer weiteren Ausführungsform der erfindungsgemässen Sanitärarmatur mit einem in bekannter Art und Weise ausziehbaren Brauseschlauch ist der Abflussdurchlass entsprechend dem Kaltwasserdurchlass und dem Warmwasserdurchlass in Axialrichtung durch den Boden hindurch geführt und in einem der Aufnahmeöffnung abgewandeten Endbereich mit einem Gewinde versehen. Mit diesem Gewinde wirkt ein Brausenschlauchgewinde eines Brauseschlauchs zusammen, welcher an seinem dem Brausenschlauchgewinde gegenüberliegenden Endbereich eine die Wasseraustrittsöffnung bildende Brause aufweist. Um den Brauseschlauch in radialer Richtung aus dem Innengehäuse heraus zu führen, weist dieses eine im Bereich der Hülsenwandung ausgebildete Brausenschlauchdurchgangsöffnung auf, durch welche der Brauseschlauch in einen schwenkbar am Innengehäuse gehaltenen Brausenschlauchhaltearm geführt ist. Dieser Brauseschlauchhaltearm ist analog zum Armaturauslaufgehäuseteil des ersten Ausführungsbeispiels am Innengehäuse gehalten. Zwischen dem Abflussdurchlass und der Brausenschlauchdurchgangsöffnung verläuft der Brauseschlauch in bekannter Art und Weise in einer Schlaufe.

Das Innengehäuse 12 ist aus einem hochbelastbaren Kunststoff gefertigt, sodass mittels der Patronenbefestigungsmutter 23 die Steuerpatrone 16 fest im Innengehäuse 12 gehalten werden kann, wodurch ebenfalls das Dichtungselement 54 fest in der in den Boden 22 eingeformten Nute 52 und in der Steuerpatronennute 62 gehalten ist. Das Innengehäuse ist bevorzugt aus dem Kunststoff mit der Handelsbezeichnung Grivory HT1V-4FWA der Ems-Chemie AG (GRIVORY ist eine eingetragene Marke der EMS-CHEMIE AG, Domat/Ems, Schweiz) gefertigt.

In einer weiteren Ausführungsform kann auch eine Steuerpatrone mit lediglich einer Zuflussmündung zur Anwendung gelangen. Eine derartige Steuerpatrone kann folglich nur die Wasserdurchflussmenge steuern. Dementsprechend kann in einem Innengehäuse für eine derartige Steuerpatrone auf den zusätzlichen Zuflussdurchlass - beispielsweise den Warmwasserdurchlass - verzichtet werden.

## Patentansprüche

1. Innengehäuse für eine Sanitärarmatur mit einer zur Aufnahme einer eine Zuflussmündung (34) und eine Abflussmündung aufweisenden Steuerpatrone (16) bestimmten, nach oben offenen Aufnahmeöffnung (14), welche umfangsseitig durch eine Wand (20) und nach unten durch einen mit der Wand (20) einstückig ausgebildeten Boden (22) begrenzt ist, an welchem ein Zuflussdurchlass (26) zum Zuleiten von Wasser zur Zuflussmündung (34) und ein Abflussdurchlass (40) zum Wegleiten des Wassers von der Abflussmündung ausgebildet sind, **dadurch gekennzeichnet, dass** am Boden (22) eine zum Aufnehmen eines Zuflussdichtungselements (54') bestimmte, nach oben offene, den Zuflussdurchlass (26) vollständig umlaufende Zuleitungsdichtungsnute (57) und eine zum Aufnehmen eines Abflussdichtungselements (54") bestimmte, nach oben offene, den Abflussdurchlass (40) vollständig umlaufende Abflussdichtungsnute (60) ausgebildet sind, wobei das Innengehäuse aus einem Kunststoff besteht.

2. Innengehäuse nach Anspruch 1, **dadurch gekennzeichnet, dass** die Zuleitungsdichtungsnute (57) beabstandet ist vom Zuflussdurchlass (26) und die Abflussdichtungsnute (60) beabstandet ist vom Abflussdurchlass (40).

3. Innengehäuse nach einem der Ansprüche 1 bis 2, **dadurch gekennzeichnet, dass** die Zuleitungsdichtungsnute (57) zusammenhängend mit der Abflussdichtungsnute (60) ausgebildet ist.

4. Innengehäuse nach einem der Ansprüche 1 bis 3, **dadurch gekennzeichnet, dass** am Boden (22) in einem der Aufnahmeöffnung (14) abgewandten Endbereich (32) des Zuflussdurchlasses (26) ein Gewinde (33) ausgebildet ist, welches dazu bestimmt ist, mit einem an der Wasserzuflussleitung (18) angeordneten Gegengewinde zusammen zu wirken.

5. Innengehäuse nach einem der Ansprüche 1 bis 4, **dadurch gekennzeichnet, dass** der Zuflussdurchlass (26) und der Abflussdurchlass (40) dazu bestimmt sind Wasser zu führen und der Abflussdurchlass (40) in eine umfangsseitig offene, im Boden ausgeformte Wasserauslassnute (48) mündet.

6. Innengehäuse nach Anspruch 5, **dadurch gekennzeichnet, dass** oberhalb der Wasserauslassnute (48) eine umlaufende obere Dichtungsaufnahmevertiefung (80) und unterhalb der Wasserauslassnute (48) eine umlaufende untere Dichtungsaufnahmevertiefung (81) am Innengehäuse (12) ausgebildet sind, welche dazu bestimmt sind, je ein Dichtungselement (89) aufzunehmen.

7. Innengehäuse nach Anspruch 5 oder 6, **dadurch gekennzeichnet, dass** der Abflussdurchlass (40) einen von der Aufnahmeöffnung nach unten weg führenden Kanalabschnitt (46) aufweist, der zumindest annähernd mittig in einen zumindest annähernd rechtwinklig zu diesem Kanalabschnitt (46) angeordneten Verbindungsabschnitt (64) mündet, und im Verbindungsabschnitt (64), in der Verlängerung des Kanalabschnitts (46), ein Umlenkelement (68) an einem Kanalboden (70) des Verbindungsabschnitts (64) ausgebildet ist, welches dazu bestimmt ist, das von der Steuerpatrone (16) her fließende Wasser kontinuierlich um zumindest annähernd 90° umzulenken, wobei eine Umlenkfläche (72) des Umlenkelements (68) kontinuierlich in eine Oberfläche des Kanalbodens (70) übergeht.

8. Innengehäuse nach Anspruch 7, **dadurch gekennzeichnet, dass** die Umlenkfläche (72) konkav ausgebildet ist.

9. Innengehäuse nach einem der Ansprüche 1 bis 8, **gekennzeichnet durch** eine wenigstens annähernd eine kreiszylindrische Form aufweisende Aussenfläche und eine radial von dieser Aussenfläche vorstehende Nase (104), die in Umfangsrichtung ausgerichteten Anschlagsflächen (106) aufweist, welche dazu bestimmt sind mit Gegenanschlagsflächen an einem das Innengehäuse (12) schwenkbar umgreifenden Armaturauslaufgehäuseteil (17) zusammenwirken.

10. Sanitärarmatur mit einem Aussengehäuse und einem in dieses eingesetztem Innengehäuse (12) nach einem der Ansprüche 1 bis 9, wobei in die Aufnahmeöffnung (14) die Steuerpatrone (16) eingesetzt ist, das Zuflussdichtungselement (54') und das Abflussdichtungselement (54'') in die Zuleitungsdichtungsnute (57) beziehungsweise in die Abflussdichtungsnute (60) eingreifen und das Aussengehäuse einen Wasserausflusskanal (42) aufweist, der mit dem Abflussdurchlass (40) strömungsverbunden ist.

11. Sanitärarmatur nach Anspruch 10, **dadurch gekennzeichnet, dass** die Steuerpatrone (16) eine zum Halten des Zuflussdichtungselements (54') und des Abflussdichtungselements (54'') bestimmte Steuerpatronennute (62) aufweist.

12. Sanitärarmatur nach Anspruch 10, **dadurch gekennzeichnet, dass** ein Armaturauslaufgehäuseteil (17) des Aussengehäuses um eine in Axialrichtung (A) verlaufende Schwenkachse schwenkbar am Innengehäuse (12) gelagert ist, wobei die Lagerung des Armaturauslaufgehäuseteil (17) am Innengehäuse (12) durch einen unteren Gleitring (92) und einen oberen Gleitring (100) ausgebildet ist, welche in Axialrichtung (A) an gegenüberliegenden Endbereichen am Armaturauslaufgehäuseteil (17) anliegen und am Innengehäuse (12) gehalten sind.

13. Sanitärarmatur nach Anspruch 12 mit einem Innengehäuse nach Anspruch 10, wobei durch die am Innengehäuse (12) ausgebildeten Anschlagsflächen (106) und den am Armaturauslaufgehäuseteil (17) angeordneten Gegenanschlagflächen eine Schwenkbegrenzung ausgebildet ist.

## Claims

1. Internal housing for a sanitary fitting with a receiving opening (14) open on its upper side and intended to receive a control cartridge (16) comprising an inlet orifice (34) and a discharge orifice, said receiving opening being bounded along its circumference by a wall (20) and at its lower end by a base (22) formed in one piece with the wall (20), being formed with an inlet opening (26) for the supply of water to the inlet orifice (34) and with a discharge opening (40) to discharge the water from the discharge orifice, **characterized in that** an inlet seal groove (57) open on its upper side and intended to receive an inlet seal element (54') and completely surrounding the inlet opening (26), and a discharge seal groove (60) open on its upper side and intended to receive a discharge seal element (54") and completely surrounding the discharge opening (40) being formed on the base (22) the internal housing being made of plastic.

2. Internal housing according to Claim 1, **characterized in that** the inlet seal groove (57) is arranged at a distance from the inlet opening (26) and the discharge seal groove (60) is arranged at a distance from the discharge opening (40).

3. Internal housing according to one of Claims 1 to 2, **characterized in that** the inlet seal groove (57) is formed contiguously with the discharge seal groove (60).

4. Internal housing according to one of Claims 1 to 3, **characterized in that** a thread (33) is formed on the base (22) in an end region (32) of the inlet opening (26) facing away from the receiving opening (14) that is intended to interact with a mating thread located on the water supply line (18).

5. Internal housing according to one of Claims 1 to 4, **characterized in that** the inlet opening (26) and the discharge opening (40) are intended to guide water and the discharge opening (40) opens into a water discharge groove (48) open around its circumference and formed in the base.

6. Internal housing according to Claim 5, **characterized in that** a continuous upper seal receiving recess (80) above the water discharge groove (48) and a continuous lower seal receiving recess (81) below the water discharge groove (48) are formed on the internal housing (12) that are each intended to receive one seal element (89).

7. Internal housing according to Claim 5 or 6, **characterized in that** the discharge opening (40) has a channel section (46) extending downwards away from the receiving opening and opening at least roughly in the middle of a connecting section (64) arranged at least roughly at right angles to this channel section (46), and a deflection element (68) is formed in the connecting section (64), in the extension of the channel section (46), on a channel base (70) of the connecting section (64) and is intended to continuously deflect the water flowing from the control cartridge (16) by at least roughly 90°, with a deflection surface (72) of the deflection element (68) continuously merging into a surface of the channel base (70).

8. Internal housing according to Claim 7, **characterized in that** the deflection surface (72) has a concave form.

9. Internal housing according to one of Claims 1 to 8, distinguished by an outer surface having an at least roughly circular cylindrical form, and a projection (104) extending radially from this outer surface and having stop surfaces (106) oriented in the circumferential direction that are intended to interact with opposite stop surfaces on a fitting discharge housing part (17) pivotably engaging around the internal housing (12).

10. Sanitary fitting with an external housing and an internal housing (12) as claimed on one of Claims 1 to 9 inserted therein, whereby the control cartridge (16) is inserted into the receiving opening (14), the inlet seal element (54') and the discharge seal element (54'') respectively engage in the inlet seal groove (57) and in the discharge seal groove (60) and the external housing has a water discharge channel (42) that has a flow connection to the discharge opening (40).

11. Sanitary fitting according to Claim 10, **characterized in that** the control cartridge (16) has a control cartridge groove (62) intended to hold the inlet seal element (54') and the discharge seal element (54").

12. Sanitary fitting according to Claim 10, **characterized in that** a fitting discharge housing part (17) of the external housing is supported pivotably about a pivot axis extending in axial direction (A) on the internal housing (12), **characterized in that** the bearing of the fitting discharge housing part (17) on the internal housing (12) is formed by a lower slide ring (92) and an upper slide ring (100) that bear against the fitting discharge housing part (17) in opposite end regions in axial direction (A) and are held on the internal housing (12).

13. Sanitary fitting according to Claim 12 with an internal housing according to claim 10, **characterized in that** a pivot limit is formed by the stop surfaces (106) formed on the internal housing (12) and the opposite stop surfaces arranged on the fitting discharge housing part (17).

## Revendications

1. Boîtier intérieur pour un robinet sanitaire avec une ouverture de réception (14) ouverte vers le haut, destinée à recevoir une cartouche de commande (16) présentant une ouverture d'arrivée (34) et une ouverture de départ, qui est délimitée en périphérie par une paroi (20) et vers le bas par un fond (22) réalisé d'une seule pièce avec la paroi (20), dans lequel sont formés un passage d'arrivée (26) pour amener de l'eau à l'ouverture d'arrivée (34) et un passage de départ (40) pour évacuer l'eau de l'ouverture de départ, **caractérisé en ce qu'**une gorge d'étanchéité d'arrivée (57) entourant complètement le passage d'arrivée (26), ouverte vers le haut et destinée à recevoir un élément d'étanchéité d'arrivée (54') et une gorge d'étanchéité de départ (60) entourant complètement le passage de départ (40), ouverte vers le haut et destinée à recevoir un élément d'étanchéité de départ (54") sont formées sur le fond (22), dans lequel le boîtier intérieur est composé d'une matière plastique.

2. Boîtier intérieur selon la revendication 1, **caractérisé en ce que** la gorge d'étanchéité d'arrivée (57) est espacée du passage d'arrivée (26) et la gorge d'étanchéité de départ (60) est espacée du passage de départ (40).

3. Boîtier intérieur selon l'une quelconque des revendications 1 à 2, **caractérisé en ce que** la gorge d'étanchéité d'arrivée (57) est réalisée en continuité avec la gorge d'étanchéité de départ (60).

4. Boîtier intérieur selon l'une quelconque des revendications 1 à 3, **caractérisé en ce qu'**un filet (33) est formé sur le fond (22), dans une région d'extrémité (32) du passage d'arrivée (26) située à l'opposé de l'ouverture de réception (14), lequel est destiné à coopérer avec un filet opposé disposé sur la conduite d'arrivée d'eau (18).

5. Boîtier intérieur selon l'une quelconque des revendications 1 à 4, **caractérisé en ce que** le passage d'arrivée (26) et le passage de départ (40) sont destinés à conduire de l'eau et le passage de départ (40) débouche dans une gorge d'évacuation d'eau (48) pratiquée dans le fond et ouverte en périphérie.

6. Boîtier intérieur selon la revendication 5, **caractérisé en ce que**, sur le boîtier intérieur (12), une rainure périphérique supérieure de réception de joint d'étanchéité (80) est formée au-dessus de la gorge d'évacuation d'eau (48) et une rainure périphérique inférieure de réception de joint d'étanchéité (81) est formée en dessous de la gorge d'évacuation d'eau (48), qui sont destinées à recevoir chacune un élément d'étanchéité (89).

7. Boîtier intérieur selon la revendication 5 ou 6, **caractérisé en ce que** le passage de départ (40) comprend un segment de canal (46) conduisant vers le bas à partir de l'ouverture de réception, qui débouche au moins à peu près au milieu dans un segment de raccordement (64) disposé au moins à peu près perpendiculairement à ce segment de canal (46), et un élément de déviation (68) est formé sur un fond de canal (70) du segment de raccordement (64), dans le segment de raccordement (64) dans le prolongement du segment de canal (46), élément qui est destiné à dévier en continu au moins à peu près de 90° l'eau s'écoulant de la cartouche de commande (16), dans lequel une face de déviation (72) de l'élément de déviation (68) se transforme en continu en une surface du fond de canal (70).

8. Boîtier intérieur selon la revendication 7, **caractérisé en ce que** la face de déviation (72) se présente sous forme concave.

9. Boîtier intérieur selon l'une quelconque des revendications 1 à 8, **caractérisé par** une surface extérieure présentant au moins à peu près une forme cylindrique circulaire et un taquet (104) saillant radialement hors de cette face extérieure, qui présente des faces de butée (106) orientées en direction périphérique, qui sont destinées à coopérer avec des faces de contre-butée formées sur une pièce de boîtier de sortie du robinet (17) entourant de façon pivotante le boîtier intérieur (12).

10. Robinet sanitaire avec un boîtier extérieur et, introduit dans celui-ci, un boîtier intérieur (12) selon l'une quelconque des revendications 1 à 9, dans lequel la cartouche de commande (16) est introduite dans l'ouverture de réception (14), l'élément d'étanchéité d'arrivée (54') et l'élément d'étanchéité de départ (54") sont logés respectivement dans la gorge d'étanchéité d'arrivée (57) et dans la gorge d'étanchéité de départ (60), et le boîtier extérieur présente un canal d'évacuation d'eau (42), qui est en liaison d'écoulement avec le passage de départ (40).

11. Robinet sanitaire selon la revendication 10, **caractérisé en ce que** la cartouche de commande (16) présente une gorge de cartouche de commande (62) destinée à retenir l'élément d'étanchéité d'arrivée (54') et l'élément d'étanchéité de départ (54").

12. Robinet sanitaire selon la revendication 10, **caractérisé en ce qu'**une pièce de boîtier de sortie du robinet (17) du boîtier extérieur est montée sur le boîtier intérieur (12) de façon pivotante autour d'un axe de pivotement orienté en direction axiale (A), dans lequel l'appui de la pièce de boîtier de sortie du robinet (17) sur le boîtier intérieur (12) est formé par un anneau de glissement inférieur (92) et un anneau de glissement supérieur (100), qui reposent en direction axiale (A) sur des zones d'extrémité opposées sur la pièce de boîtier de sortie du robinet (17) et qui sont maintenus sur le boîtier intérieur (12).

13. Robinet sanitaire selon la revendication 12 avec un boîtier intérieur selon la revendication 10, dans lequel une limitation du pivotement est réalisée par les faces de butée (106) formées sur le boîtier intérieur (12) et les faces de contre-butée disposées sur la pièce de boîtier de sortie du robinet (17).
